Europäisches Patentamt

European Patent Office

Office européen des brevets

(11) Veröffentlichungsnummer : **0 078 468**
**B1**

(12) **EUROPÄISCHE PATENTSCHRIFT**

(45) Veröffentlichungstag der Patentschrift :
25.03.87

(21) Anmeldenummer : 82109781.3

(22) Anmeldetag : 22.10.82

(51) Int. Cl.⁴ : **F 16 B 12/28**

54 **Traggestell.**

(30) Priorität : 30.10.81 CH 6962/81

(43) Veröffentlichungstag der Anmeldung :
11.05.83 Patentblatt 83/19

(45) Bekanntmachung des Hinweises auf die Patenterteilung : 25.03.87 Patentblatt 87/13

(84) Benannte Vertragsstaaten :
AT BE DE FR GB IT NL SE

(56) Entgegenhaltungen :
DE-A- 2 108 342
DE-A- 2 256 919
US-A- 3 574 367

(73) Patentinhaber : Fehlbaum & Co.
Unterdorfstrasse 21
CH-4143 Dornach (CH)

(72) Erfinder : Korth, Bernd
Bühlstrasse 54
D-7858 Weil am Rhein (DE)

(74) Vertreter : Gehrig, Peter et al
A. Braun, Braun, Héritier, Eschmann AG Holbeinstrasse 36-38
CH-4051 Basel (CH)

Jouve, 18, rue St-Denis, 75001 Paris, France

**Beschreibung**

Die Erfindung betrifft ein nach dem Baukastenprinzip aufgebautes Traggestell mit Stütz- bzw. Säulen- und Traversenelementen nach dem Oberbegriff des Patentanspruchs 1.

Es ist bekannt, für den raschen Auf- und Abbau von aus Standard- oder Normteilen erstellten Säulentraggestellen Traversenelemente zu verwenden, die durch Schraub-, Klemm- oder Einhängeglieder an den Tragsäulen angeschlossen sind, um jeweils zwei benachbarte Säulen miteinander verbinden. Weiterhin sind Traggestelle der Art bekannt geworden, bei welchen die Traversenanschlussstellen an den Säulen so gestaltet sind, dass im montierten Zustand der Traversen keine über das Säulenprofil herausragenden Teile vorhanden sind, die nicht selbst eine Trag- oder Stützfunktion erfüllen.

Obschon solche Traggestelle vielfach hohe Ansprüche in ästhetischer Beziehung zu erfüllen vermögen, ist durch im Anlieferungszustand über das Traversenende hinausragende Eingriffsmittel aber nur ein « freier » Vorbau möglich, weil solche Traversen nicht zwischen vorhandene feste Säulen einbaubar sind.

Es wurden deshalb Mittel vorgeschlagen, welche im unbenutzten Zustand der Traverse so in deren Ende einschiebbar sind, dass keine Klemmglieder mehr vorstehen. Damit war es möglich, längengenormte Traversenelemente auch in bereits bestehende geschlossene Rahmengebilde aus Säulen- oder andern Stützelementen einzubauen, ohne dass Teile davon demontiert werden müssen. Siehe diesbezüglich die DE-A-2 256 919 und die DE-A-2 108 342.

In diesen Druckschriften werden in die Enden von Hohlprofil-Traversen einbaubare Klemmeinrichtungen gezeigt, die zwar vollständig in der Profilöffnung « versenkbar » sind, aber kein Festziehen der Traverse an einer Säule gestatten. Entsprechend ergibt sich eine wenig belastbare Verbindung zwischen der Säule und der Traverse.

Das Ziel der vorliegenden Erfindung ist ein Traggestell zu schaffen, bei dem längengenormte Traversenelemente unter Vorspannung in ein geschlossenes Rahmengebilde aus Säulen- oder anderen Stützelementen einbaubar sind.

Die Erfindungsaufgabe besteht somit darin, die Eingriffsglieder an den Traversenenden des Traggestells so zu gestalten, dass sie einesteils ohne Werkzeug in eine Rückzugsstellung bzw. in eine Gebrauchsstellung bringbar und sowohl in der Rückzugs- als auch in der Gebrauchsstellung bezüglich des Traversenkörpers arretierbar sind.

Die Lösung dieser Aufgabe geht aus dem kennzeichnenden Teil des Patentanspruchs 1 hervor ; bevorzugte Ausführungsformen des Erfindungsgegenstandes sind durch die abhängigen Ansprüche definiert.

Der Vorteil eines solchen Traggestells besteht darin, dass die Klemmfixierung der Traverse an beiden von zwei benachbarten Säulenelementen ohne zusätzliche Mittel der Traversenklemmeinrichtung erzielbar ist.

Die Erfindung wird nachstehend anhand der Zeichnung beschrieben. Darin zeigt :

Figur 1   den Anschluss einer Traverse an eine mit Eingriffsschlitzen versehene Tragsäule im Schnitt,

Figur 2   eine teilweise geschnittene Ansicht in der Ebene III-III gemäss Fig. 1, und

Figur 3   ein weiterer Traversenanschluss ähnlich der Fig. 1 mit einer zweiten Ausführungsform des Klemmgliedes.

Gleiche Referenznummern in den Figuren bezeichnen gleiche Bauteile.

Das Beispiel zeigt als Stützelement eine typische kreuzförmige Säule 1 mit zwei Eingriff- oder Zentrierkanälen 2, deren Boden durch eine rechtwinklig zum jeweiligen Kreuzschenkel stehende Pofilwand 3 gebildet ist, in welcher in regelmässigen Abständen Längsschlitze 4 angebracht sind. Die radial äusseren Enden 5 der Kreuzschenkel sind als Anschlagfläche für die an der Säule 1 anzuschliessende Traverse 6 wirksam. Im Innern des Kreuzprofils befindet sich ein kreuzförmiger Hohlraum 7, der radial auswärts durch die Profilwände 3 begrenzt ist.

Der Körper der Traverse 6 ist als Rechteckrohr 6' gezeigt, in dessen beiden Endbereichen je ein Spreizelementpaar 8 eingesetzt ist. Die einzelnen Spreizelemente 8', 8" sind im Querschnitt rechteckförmige längliche Metallschienen, die schmalseitig übereinanderliegend seitlich im Rohrinnern längsgeführt beweglich sind. Sie enthalten je einen an die Anklemmzone im Bereich der Längsschlitze 4 an der Säule 1 angepassten Kopfteil 9, eine die beiden Spreizelemente 8', 8" miteinander kuppelnde Parallelführung 10 und eine Spannschraube 11, durch welche die beiden Spreizelemente 8', 8" einen kraftschlüssigen Eingriff zwischen der Säule 1 und der Traverse 6 herstellen.

Der Kopfteil 9 der Spreizelemente 8', 8" ist bezüglich ihrer einander zugewandten Schmalseiten spiegelbildlich und somit identisch gestaltet und im Falle eines Kreuzprofils mit (wie gezeigt) zwei Zentrierkanälen 2, in zwei Spannlaschen 12 aufgegabelt. Jede der Spannlaschen 12 besitzt somit identische Form und weist einen stirnseitigen Einlaufabschnitt 15 mit reduzierter Höhe h und in einem daran anschliessenden zentralen Grundrissbereich eine Klemmnute 13 auf, die beidseits von schrägliegenden Zentrierwänden 14, 14' begrenzt ist. Der Nutengrund der Klemmnute 13 liegt etwa auf der halben Höhe der Metallschiene. Die Höhe h des Einlaufabschnittes 15 misst etwas weniger als die Hälfte der Höhe H des Längsschlitzes 4. Damit ist sichergestellt, dass die beiden Kopfteile 9 bei satt aufeinanderliegenden Spreizelementen 8', 8" bei der Montage der Traverse 6 bequem in die Schlitze 4 eingeschoben werden können.

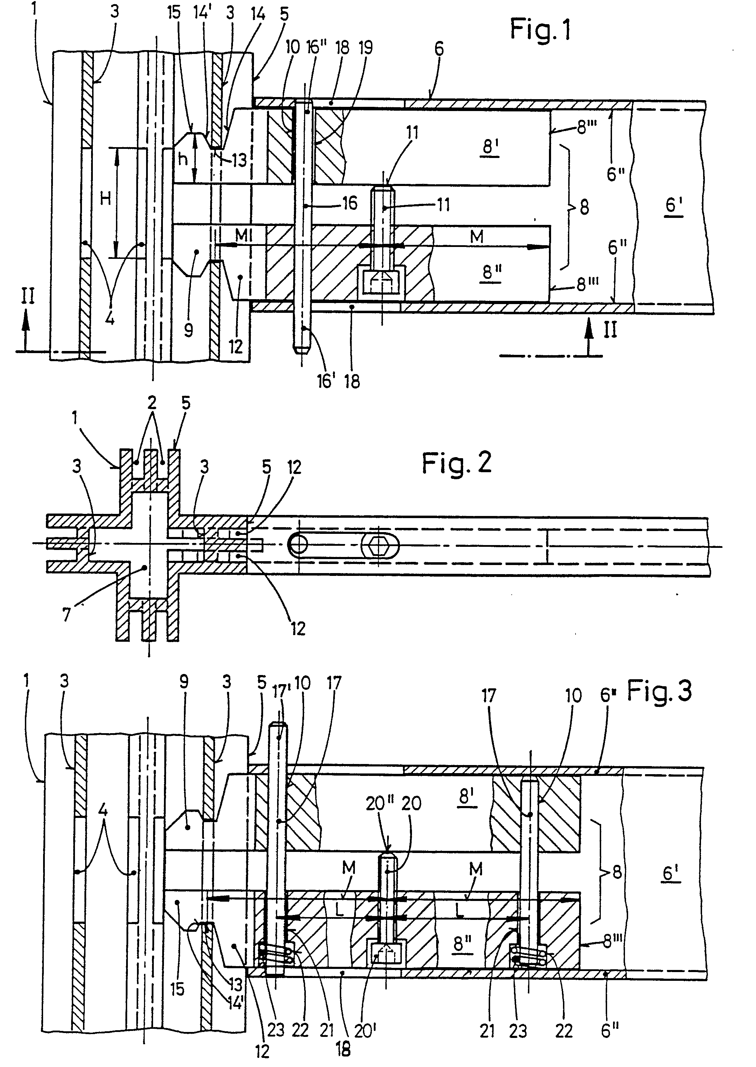

Die beiden Spreizelemente 8', 8" des Spreizelementenpaares 8 sind durch die Parallelführung 10 miteinander gekuppelt, um eine gegenseitige Längsverschiebung auszuschliessen. Die Fig. 1 und 3 zeigen diesbezüglich Führungsstifte 16 bzw. 17, die jeweils im einen Spreizelement festsitzen, und im anderen in einem Gleitsitz verschiebbar geführt sind. Die bezüglichen Unterschiede bei den Ausführungsformen nach den Fig. 1 und 3 sind später erläutert.

Die Spannschraube 11 sitzt in einer Gewindebohrung des unteren Spreizelementes 8″ etwa in der Mitte zwischen der Profilwand 3 als dem einen Spannreferenzpunkt, und der Endkante 8‴ als einem anderen Spannreferenzpunkt. Die bezüglichen Abstandsmaße M sind somit etwa gleich gross. Die Spannschraube 11 ist bevorzugt eine Inbusschraube mit Innensechskant. Sie dient dazu, die beiden Spreizelement 8′, 8″ so auseinander zudrängen, dass deren bezügliche Auflagestellen am Traversenrohr 6′ und an der Säule 1 bzw. an deren Schlitzen 4 in kraftschlüssigen Eingriff gelangen.

Das Spreizelementpaar 8 ist im Endabschnitt des Traversenrechteckrohrs 6′ verschiebbar gefangen und zwischen einer Rückzugsstellung, in welcher die Kopfteile 9 vollständig im Innern des Rohrs 6′ liegen, und einer Gebrauchsstellung entsprechend seiner Lage im montierten Zustand der Traverse, frei verschiebbar. Die Endstellungen sind jeweils durch Anschlagbereiche an Teilen des Spreizelementpaares 8 in am Traversenrohr 6′ festgelegt. Die Anschlagstelle in der vorderen (ausgezogenen) Endstellung bildet gleichzeitig die Festspannarretierung des Spreizelementpaares 8 am Traversenrohr 6′ ; der Anschlag in der hinteren Endstellung begrenzt den Einwärts-Schiebeweg des Spreizelementpaares und befindet sich an einer Stelle, bei deren Erreichen das Kopfteil 9 vollständig in das Rohrinnere eingetaucht ist.

In der Ausführungsform nach Fig. 1 sind die vordere und die hintere Endstellung durch die Enden von Langlöchern 18 auf der oberen und unteren Schmalseite 6″ des Traversenrohres 6′ festgelegt, durch welche die beidseitigen Enden des Führungsstiftes 16 greifen. Die Langlochbreite ist so gewählt, dass ausser dem Führungsstift 16 auch der Inbusschraubenschlüssel für die Betätigung der Spannschraube 11 hindurchtreten kann. Bei der Montage der Traverse 6 nach Fig. 1 werden sowohl durch Auswärtsschrauben der Spannschraube 11 als auch durch Einwärtsdrücken des Führungsstiftendes 16′ von Hand die beiden Spreizelemente 8′, 8″ zum gegenseitigen Anliegen gebracht, wobei der Stift 16 in der Führungsbohrung 19 verschiebbar ist und dabei über die Traversenoberfläche hinaustritt. In dieser Stellung weisen die beiden Einlaufabschnitte 15 der Spreizelement-Kopfteile 9 eine Gesamthöhe 2h auf, die etwas niedriger ist als die Höhe H der Schlitze 4, so dass die Spannlaschen 12 bequem in die Schlitze 4 einführbar sind. Sofern die Traverse 6 fliegend an einer Säule 1 anzukuppeln ist, wird das Spreizelementpaar 8 durch Anlegen einer Verschiebekraft an dem nun über die obere Traversenfläche herausragende Führungsstiftende 16″ vorgeschoben und in die Schlitze 4 eingeführt. Wenn dagegen die Traverse 6 zwischen zwei feststehende Säulen 1 einzusetzen ist, werden die Spreizelementpaare 8 an beiden Traversenenden einwärts geschoben, die Traverse auf der Höhe der Schlitze 4 an die Säule angesetzt und anschliessend jedes Spreizelementpaar 8 durch Auswärtsschieben bis zum Anschlag in die Säulen eingefahren.

Wenn die Traverse 6 auf diese Weise an einer oder zwei Säulen eingehängt ist, wird die Spannschraube 11 wieder einwärts gedreht, wobei die beiden Spreizelemente 8′, 8″ voneinander weggedrängt werden. Dabei zentriert sich die Klemmnute 13 längs der schrägen Zentrierwände 14, 14′ auf die Profilwand 3 und zieht dabei die Traverse 6 an die Säule 1 heran. Die Enden 16′, 16″ des Führungsstiftes 16 beginnen sich satt an die Vorderenden der Langlöcher 18 anzulegen. Die Anpresskraft zwischen der Säule 1 und der Traverse 6 wird beim Festziehen der Spannschraube 11 durch die von der schrägen Zentrierwand 14′ ausgehenden Keilwirkung gegenüber der Innenseite der Profilwand 3, und die Auflagerreaktion der Stiftenden 16′, 16″ an den Enden der Langlöcher 18 erzeugt. Durch die beim Festziehen der Spannschraube 11 auftretende Hebelkraft zwischen der Eingriffstelle im Bereich der Klemmnute 13 und dem Auflagebereich 11′ der Schraube 11 am Spreizelement 8′, kommen die im Klemmzustand nahe an die Traverseninnenwände 6″ herausreichenden Spreizelemente 8′, 8″ mit ihren inneren Enden 8‴ zum Aufliegen auf den Traversenschmalwänden 6″. Daraus ergibt sich eine Verstärkung der Klemmwirkung im Bereich der Klemmnute 13. Eine dabei allfällig auftretende geringfügige Biegebeanspruchung des Führungsstiftes 16 kann elastisch aufgenommen werden.

In der Ausführungsform nach Fig. 3 sind die Kopfteile 9 grundsätzlich gleich wie anhand der Fig. 1 beschrieben gestaltet, so dass auf eine separate Beschreibung dieses Teils verzichtet wird. Für die gegenseitige Parallelführung der Spreizelemente 8′, 8″ sind zwei Führungsstifte 17 vorgesehen, die in praktisch gleichen Abständen L von der Spannschraube 20 angeordnet sind. Der eine davon durchsetzt wie in Fig. 1 gezeigt die Schmalseiten 6″ des Traversenrohres 6′, während der andere sich vollständig innerhalb des Traversenrohres 6′ befindet. Die Spannstifte 17 sitzen im Spreizelement 8′ des Spreizelementpaares 8 fest, und sind im Spreizelement 8″ in einer Führungsbohrung 21 verschiebbar geführt. Das die Führungsbohrungen 21 enthaltende Spreizelement enthält auf seiner Aussen- bzw. Unterseite Federgehäuse 22, die vorzugsweise koaxial zu den Führungsbohrungen 21 angeordnet sind und zur Aufnahme von Rückstossfedern 23 dienen. Deren Wirkungsweise ist später beschrieben.

Die Spannschraube 20 ist bevorzugt eine Inbusschraube mit Innensechskant. Sie ist wie oben beschrieben zweckmässig in der Längenmitte (Abmessungen M) zwischen der Klemmnute 13 und der Endkante 8''' des Spreizelementes 8'' in einer Gewindebohrung angeordnet. Ihr Kopf 20' liegt, wie in Fig. 1 dargestellt, im Innern der Traverse 6 und ist nur im ausgezogenen Zustand der Spreizelemente 8', 8'' von der Traversenaussenseite her zugänglich. Die Länge und die Lage des Langlochs 18 entsprechen der Situation in Fig. 1.

Schraubt man vor der Montage der Traverse nach Fig. 3 die Spannschraube 20 aus, so bewegt sich das Spreizelement 8'' unter der Wirkung der Druckfedern 23 gegen das Spreizelement 8' und legt sich schliesslich an dieses an. Die Einlaufabschnitte 15 des Kopfteils 9 weisen somit wieder eine Gesamthöhe auf, die etwas niedriger ist als die Höhe der Schlitze 4, so dass sich die Spannlaschen 12 bequem in diese einführen lassen. Die Verschiebekraft für das durch die beiden Führungsstiften 17 gekuppelte Spreizelementpaar 8 wird über den überstehenden Abschnitt 17' des linksseitigen Führungsstiftes 17 aufgebracht.

Das Einsetzen und Festziehen der Traverse 6 an der Säule 1 erfolgt wie oben bezüglich der Fig. 1 beschrieben, wobei das Ende 17' des nach aussen verlängerten Stiftes 17 zum Ausschrieben des Spreizelementpaares 8 aus dem Innern der Traverse 6' dient. Beim Einschrauben der Spannschraube 20 entfernen sich die beiden Spreizelemente 8', 8'' wieder, wobei die Druckfedern 23 zusammengepresst werden. Der Lageausgleich der Spreizelemente 8', 8'' innerhalb des Traversenrohres 6' durch die Hebelwirkung an ihren Auflagestellen 3, 13 an der Säule 1, im Auflagebereich 20'' der Spannschraube 20 und an der Endkante 8''' auf der Innenseite des Traversenrohres 6' erfolgt gleich wie oben beschrieben. Die für das Festklemmen der Traverse 6 an der Säule 1 erforderliche Andruckkraft entsteht durch die Keilwirkung zwischen der schrägen Zentrierwand 14' am Kopfteil 9 und der Auflagerreaktion des Schraubenkopfes 20' am äusseren Ende des Langloches 18. Die Spreizelemente 8', 8'' liegen im Klemmzustand wiederum nahe an den Traverseninnenwänden 6'' an. Die durch die Hebelwirkung beim Festziehen der Spannschraube 20 an den Spreizelementen 8', 8'' auftretende Verschwenkung ihrer inneren Enden 8''' bis zum Anliegen an den Traversenwänden 6'' ist daher minimal und wird von den Führungsstiften 17 elastisch aufgenommen.

## Patentansprüche

1. Traggestell mit Stütz- bzw. Säulenelementen (1) und Traversen (6), welche letztere zwischen zwei einander in derselben Ebene gegenüberliegende Säulenelemente (1) eingebaut sind, und mindestens an ihren Enden einen Hohlraum zur Aufnahme von in Längs- und Querrichtung bewegungsgeführten und durch mindestens einen Führungsstift (16, 17) miteinander zusammengekuppelten und parallel geführten Spreizelementen (8', 8'') aufweisen, welche Spreizelemente (8', 8'') einesteils zwischen einer Park- und einer Klemmstellung längsverschiebbar und seitwärts zueinander distanzierbar sind, ferner mit den Stütz- bzw. Säulenelementen (1) paarweise in und ausser Eingriff bringbar und einen in den Hohlraum einschiebbaren Kopfteil (9) mit Klemmmitteln (13) enthalten, sowie durch eine von der Aussenseite der Traverse (6) her betätigbare Spannschraube (11) auseinanderdrängbar sind, dadurch gekennzeichnet daß mindestens einer der Führungsstifte (16) in einem (8'') der Spreizelemente fixiert und im andern (8') gleitbar beweglich ist wobei dieser Führungsstift (16) durch Langlöcher (18) in den zugeordneten Seiten (6'') der Traverse (6) greift derart, dass der Längsbewegungsweg der Spreizelemente (8', 8'') durch die Endbegrenzungen der Langlöcher (18) festgelegt, und damit ein Reibungseingriff zwischen dem Traversenende und der Säulenelement-Oberfläche erzielbar ist.

2. Traggestell nach Anspruch 1, dadurch gekennzeichnet, dass der Führungsstift (16) zum Einwärtsdrängen des mit ihm fest verbundenen Spreizelementes (8'') eine über die bezügliche Schmalseite (6'') der Traverse (6) herausragende Verlängerung (16') aufweist, um das Lösen der Spreizelemente (8', 8'') aus dem Eingriff mit dem bezüglichen Stütz- bzw. Säulenelement (1) zu erleichtern.

3. Traggestell nach Anspruch 1, dadurch gekennzeichnet, dass die Traverse (6') ein Rechteckrohr ist und zwischen dem einen (8'') der Spreizelemente und der benachbarten Seitenwand (6'') des Rechteckrohrs mit jedem der Führungsstifte (16 ; 17) zusammenwirkende Druckfedern (23) angeordnet sind, welche das genannte Spreizelement (8'') beim Herausschrauben der Spannschraube (11) gegen das andere Spreizelement (8') drängen (Fig. 3).

## Claims

1. Support structure having support or upright elements (1) and crosspieces (6), the latter being incorporated between two opposing upright elements (1) in the same plane, and having, at least at their ends, a cavity for receiving expansion elements (8', 8'') which are moved in the longitudinal and transverse direction and coupled together by means of at least one guide pin (16, 17) and are guided parallel to each other, these expansion elements (8', 8'') being longitudinally movable between a resting position and a clamping position and being capable of being spaced laterally from each other, capable of being brought into and out of engagement, in pairs, with the support or upright elements (1) and containing a top part (9) with clamping means (13) capable of insertion in the cavity, and capable of being moved apart by means of a tightening screw (11) which is actuatable from outside the crosspiece (6), characterised in that at least one of the guide pins (16) is fixed in one of the expansion elements (8'') and is slidingly movable in the other expansion element (8'), whilst this guide pin (16) engages through oblong holes (18) in the associated sides (6″) of the crosspiece (6) in such a way that the path of longitudinal movement of the expansion elements (8′, 8″) is determined by the end limits of the oblong holes (18), and in this way frictional engagement between the end of the crosspiece and the surface of the upright element can be achieved.

2. Support structure as claimed in claim 1, characterised in that the guide pin (16) comprises, for inward displacement of the expansion element (8″) which is fixedly connected thereto, an extended portion (16′) projecting beyond the associated narrow end (6″) of the crosspiece (6), in order to facilitate the release of the expansion elements (8′, 8″) from engagement with the respective support or upright element (1).

3. Support structure as claimed in claim 1, characterised in that the crosspiece (6′) is a rectangular tube and between one of the expansion elements (8″) and the adjacent side wall (6″) of the rectangular tube, compression springs (23) cooperating with each of the guide pins (16, 17) are provided, which force the above-mentioned expansion element (8″) against the other expansion element (8′) when the tightening screw (11) is unscrewed (Fig. 3).

**Revendications**

1. Ossature de support comportant des éléments de support ou montants (1) et des traverses (6), ces dernières étant installées entre deux montants (1) opposés l'un à l'autre dans le même plan et présentant, au moins dans leurs extrémités, un creux destiné à recevoir des éléments d'expansion (8′, 8″) guidés dans leur mouvement dans le sens longitudinal et transversal, couplés l'un à l'autre par au moins une broche de guidage (16, 17) et guidés de manière parallèle, ces éléments d'expansion (8′, 8″) pouvant coulisser longitudinalement entre une position escamotée et une position de serrage et être espacés l'un de l'autre latéralement, pouvant en outre être amenés par paire en prise avec les éléments de support ou montants (1) ou être dégagés de ceux-ci, comprenant une tête (9) avec des moyens de serrage (13) pouvant être repoussés dans les creux et pouvant être écartés l'un de l'autre de force par une vis de serrage (11) pouvant être actionnée depuis l'extérieur de la traverse (6), caractérisée en ce qu'au moins une des broches de guidage (16) est fixée dans un des éléments d'expansion (8″) et peut coulisser dans l'autre (8′), cette broche de guidage (16) traversant des boutonnières (18) dans les côtés associés (6″) de la traverse (6) d'une manière telle que le trajet de déplacement longitudinal des éléments d'expansion (8′, 8″) est fixé par les limites d'extrémité des boutonnières (18) et qu'ainsi un engagement à friction peut être obtenu entre l'extrémité de la traverse et la surface du montant.

2. Ossature de support suivant la revendication 1, caractérisée en ce que, pour repousser vers l'intérieur l'élément d'expansion (8″) qui est relié rigidement à la broche de guidage (16), celle-ci comporte un prolongement (16′) qui dépasse au-dessus de la face étroite correspondante (6″) de la traverse (6), afin de faciliter le dégagement des éléments d'expansion (8′, 8″) de toute prise avec l'élément de support ou montant (1) correspondant.

3. Ossature de support suivant la revendication 1, caractérisée en ce que la traverse (6′) est un tube rectangulaire et qu'entre le premier (8″) des éléments d'expansion et la paroi latérale (6″) voisine du tube rectangulaire sont disposés des ressorts de pression (23) coopérant avec chaque broche de guidage (16, 17), ces ressorts repoussant l'élément d'expansion (8″) contre l'autre élément d'expansion (8′) lors du dévissage de la vis de serrage (11) (Fig. 3).

Fig.1

Fig.2

Fig.3